(19) Europäisches Patentamt
European Patent Office
Office européen des brevets

(11) **EP 4 123 577 A1**

(12) **EUROPEAN PATENT APPLICATION**
published in accordance with Art. 153(4) EPC

(43) Date of publication:
**25.01.2023 Bulletin 2023/04**

(21) Application number: **21851366.1**

(22) Date of filing: **11.06.2021**

(51) International Patent Classification (IPC):
*G06T 7/00* (2017.01)     *G01N 33/48* (2006.01)
*G01N 33/483* (2006.01)     *G01N 21/17* (2006.01)
*G01N 21/41* (2006.01)

(52) Cooperative Patent Classification (CPC):
**G01N 21/17; G01N 21/41; G01N 33/48;**
**G01N 33/483; G06T 7/00**

(86) International application number:
**PCT/JP2021/022375**

(87) International publication number:
**WO 2022/024564 (03.02.2022 Gazette 2022/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.07.2020  JP 2020129097**

(71) Applicants:
• **Hamamatsu Photonics K.K.**
  **Hamamatsu-shi, Shizuoka 435-8558 (JP)**
• **NATIONAL UNIVERSITY CORPORATION**
  **HAMAMATSU**
  **UNIVERSITY SCHOOL OF MEDICINE**
  **Hamamatsu-shi, Shizuoka 431-3192 (JP)**

(72) Inventors:
• **HASHIMOTO Fumio**
  **Hamamatsu-shi, Shizuoka 435-8558 (JP)**
• **OTE Kibo**
  **Hamamatsu-shi, Shizuoka 435-8558 (JP)**
• **YAMADA Hidenao**
  **Hamamatsu-shi, Shizuoka 435-8558 (JP)**
• **KIKUCHI Hirotoshi**
  **Hamamatsu-shi, Shizuoka 431-3192 (JP)**
• **HIROTSU Amane**
  **Hamamatsu-shi, Shizuoka 431-3192 (JP)**
• **OKAZAKI Shigetoshi**
  **Hamamatsu-shi, Shizuoka 431-3192 (JP)**

(74) Representative: **Hoffmann Eitle**
**Patent- und Rechtsanwälte PartmbB**
**Arabellastraße 30**
**81925 München (DE)**

(54) **ASSESSMENT DEVICE, ASSESSMENT METHOD, ASSESSMENT PROGRAM, AND RECORDING MEDIUM**

(57)     Whether or not a cell is a blood cell is accurately discriminated. A discrimination device 10 is a device that discriminates whether or not a discrimination target object is a blood cell based on an image of the discrimination target object, and includes a blood cell feature extraction unit 11 that acquires an image of a blood cell and extracts a feature of the blood cell from the acquired image, a discrimination target object feature extraction unit 12 that acquires the image of the discrimination target object and extracts a feature of the discrimination target object from the acquired image, and a discrimination unit 13 that discriminates whether or not the discrimination target object is a blood cell through anomaly detection based on the extracted feature of the blood cell and the feature of the discrimination target object.

*Fig.1*

**Description**

**Technical Field**

The present invention relates to a discrimination device, a discrimination method, a discrimination program, and a recording medium for discriminating between whether or not a discrimination target object is a blood cell based on an image of the discrimination target object.

**Background Art**

Cells that have been released from primary tumor tissue or metastatic tumor tissue and have infiltrated into blood are called circulating tumor cells (CTC). These CTCs are present in a very small amount in peripheral blood of patients with solid cancers, are thought to be involved in metastasis, and have been extensively studied in recent years. On the other hand, because most of nucleated cells in peripheral blood are white blood cells, it is important to identify the white blood cells and cancer cells. In a clinical application of CTCs, it is reported that a mortality rate after one year is 19% when the number of CTCs in 7.5 mL of whole blood is smaller than five in breast cancer patients, and the mortality rate after one year is 53% when the number of CTCs is equal to or larger than five. Thus, it is conceivable that identification and examination of CTCs has a high clinical application value and is, for example, useful for prediction of prognosis. There is also a report that it is not possible to discriminate between white blood cells and cancer cells based on their sizes depending on a type of cancer. A method of identifying cells using morphological information (image information in which not only an external shape but also an internal structure is reflected) of the cells has been reported (see, for example, Patent Literature 1).

**Citation List**

**Patent Literature**

[Patent Literature 1] International Publication No. 2016/017533

**Summary of Invention**

**Technical Problem**

In a method shown in Patent Literature 1, it is necessary to prepare and learn images related to all cell types to be identified in advance. It is difficult to prepare a large amount of CTCs themselves as learning data (teacher data) due to the rarity of CTCs (it is said that one CTC is mixed with one million white blood cells). Therefore, in Patent Literature 1, an image of cultured cancer cells is used instead of an image of CTCs. It is said that CTCs and cultured cancer cells are very similar, but this is thought to depend on a type of cancer. Therefore, when discrimination is performed using images of cultured cancer cells, there is concern that the discrimination cannot always be performed accurately.

An embodiment of the present invention has been made in view of the above, and an object of the present invention is to provide a discrimination device, a discrimination method, a discrimination program, and a recording medium that can accurately perform discrimination of whether or not cells are blood cells.

**Solution to Problem**

In order to achieve the above object, a discrimination device according to an embodiment of the present invention is a discrimination device for discriminating whether or not a discrimination target object is a blood cell based on an image of the discrimination target object, and includes a blood cell feature extraction means configured to acquire an image of a blood cell and extract a feature of the blood cell from the acquired image; a discrimination target object feature extraction means configured to acquire the image of the discrimination target object and extract a feature of the discrimination target object from the acquired image; and a discrimination means configured to discriminate whether or not the discrimination target object is a blood cell through anomaly detection based on the feature of the blood cell extracted by the blood cell feature extraction means and the feature of the discrimination target object extracted by the discrimination target object feature extraction means.

In the discrimination device according to an embodiment of the present invention, whether or not the discrimination target object is a blood cell is discriminated through anomaly detection based on the feature of the blood cell and the feature of the discrimination target object. Accordingly, for example, even when the discrimination of whether the discrimination target object is a white blood cell or a CTC is performed, it suffices if the feature of the white blood cell can be extracted and it is possible to perform the discrimination without preparing the features of the CTCs themselves or the features of the cultured cancer cells. That is, it is possible to perform the discrimination without preparing the features of non-blood cells. Therefore, with the discrimination device according to an embodiment of the present invention, for example, it is possible to prevent a decrease in accuracy of discrimination when the features of the cultured cancer cells are used. That is, the discrimination device according to an embodiment of the present invention, it is possible to accurately perform the discrimination of whether or not a cell is a blood cell.

The discrimination means may discriminate whether or not the discrimination target object is the blood cell through a local outlier factor (LOF) or a One class support vector machine (SVM) as the anomaly detection. According to this configuration, it is possible to perform the discrimination appropriately and reliably.

The blood cell feature extraction means may acquire an image of an optical thickness distribution of the blood cell, and the discrimination target object feature extraction means may acquire an image of an optical thickness distribution of the discrimination target object. According to this configuration, it is possible to reliably extract features for accurately performing the discrimination, and to appropriately and reliably perform the discrimination.

The blood cell may include a white blood cell. According to this configuration, for example, it is possible to accurately perform estimation of whether the discrimination target object is a CTC.

The blood cell feature extraction means may extract features of a plurality of blood cells, and the discrimination means may perform clustering of the plurality of blood cells based on the features of the plurality of blood cells, and select a blood cell to be used for discrimination of whether or not the discrimination target object is a blood cell based on a result of the clustering. According to this configuration, it is possible to make the feature of the blood cell that is used for discrimination more appropriate, and as a result, it is possible to accurately perform the discrimination.

Incidentally, an embodiment of the present invention can be described as an invention of the discrimination device as described above, and can also be described as an invention of a discrimination method, a discrimination program, and a recording medium as follows. Although categories are different, these are substantially the same inventions and have similar operations and effects.

That is, a discrimination method according to an embodiment of the present invention is a discrimination method as an operation method of a discrimination device for discriminating whether or not a discrimination target object is a blood cell based on an image of the discrimination target object, the discrimination method including: a blood cell feature extraction step of acquiring an image of a blood cell and extracting a feature of the blood cell from the acquired image; a discrimination target object feature extraction step of acquiring the image of the discrimination target object and extracting a feature of the discrimination target object from the acquired image; and a discrimination step of discriminating whether or not the discrimination target object is a blood cell through anomaly detection based on the feature of the blood cell extracted in the blood cell feature extraction step and the feature of the discrimination target object extracted in the discrimination target object feature extraction step.

A discrimination program according to an embodiment of the present invention is a discrimination program for causing a computer to operate a discrimination device for discriminating whether or not a discrimination target object is a blood cell based on an image of the discrimination target object, the discrimination program causing the computer to function as: a blood cell feature extraction means configured to acquire an image of a blood cell and extract a feature of the blood cell from the acquired image; a discrimination target object feature extraction means configured to acquire the image of the discrimination target object and extract a feature of the discrimination target object from the acquired image; and a discrimination means configured to discriminate whether or not the discrimination target object is a blood cell through anomaly detection based on the feature of the blood cell extracted by the blood cell feature extraction means and the feature of the discrimination target object extracted by the discrimination target object feature extraction means.

A recording medium according to an embodiment of the present invention is a computer-readable recording medium having the discrimination program recorded thereon.

**Advantageous Effects of Invention**

According to an embodiment of the present invention, it is possible to accurately discriminate whether or not a cell is a blood cell.

**Brief Description of Drawings**

FIG. 1 is a diagram illustrating a configuration of a discrimination device according to an embodiment of the present invention.
FIG. 2 is a diagram illustrating an overview of discrimination in the embodiment of the present invention.
FIG. 3 is a flowchart illustrating a discrimination method which is processing that is executed by the discrimination device according to the embodiment of the present invention.

FIG. 4 is a graph showing a receiver operating characteristic (ROC) curve according to the embodiment of the present invention.

FIG. 5 is a graph showing positions of features of clustered white blood cells.

FIG. 6 is a graph showing an ROC curve according to discrimination using the clustered white blood cells.

FIG. 7 is a diagram illustrating a configuration of a discrimination program according to the embodiment of the present invention together with a recording medium.

**Description of Embodiments**

Hereinafter, embodiments of a discrimination device, a discrimination method, a discrimination program, and a recording medium according to the present invention will be described in detail along with the drawings. In the description of the drawings, the same elements are denoted by the same reference signs, and repeated descriptions are omitted.

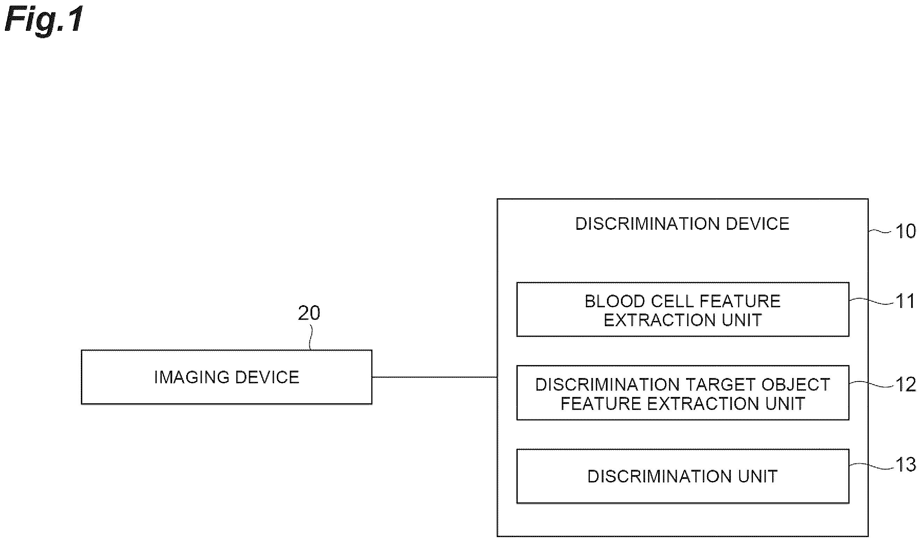

FIG. 1 illustrates a discrimination device 10 according to the present embodiment. The discrimination device 10 is a device that discriminates (identifies) whether or not the discrimination target object is a blood cell based on an image of the discrimination target object. For example, the discrimination device 10 sets cells in blood of a subject as discrimination target objects and discriminates whether the cells in the blood of the subject are white blood cells. When a discrimination is made that the cells in the blood are not white blood cells, the cells in the blood are inferred to be CTCs. That is, the discrimination device 10 estimates whether or not the cells in the blood of the subject are CTCs. As described above, the estimation of whether or not the blood includes CTCs has a high clinical application value. The discrimination device 10 is not limited to the above discrimination device, and may be any device that discriminates whether or not the discrimination target object is a predetermined blood cell.

The discrimination device 10 is, for example, a conventional computer including hardware such as a central processing unit (CPU), a memory, and a communication module. Further, the discrimination device 10 may be a computer system including a plurality of computers. Further, the discrimination device 10 may be configured by cloud computing. Each function of the discrimination device 10, which will be described below, is exerted by components thereof operating according to a program or the like.

The imaging device 20 is a device that images the blood cells and the discrimination target object to acquire images that are used for discrimination in the discrimination device 10. For example, the image acquired by the imaging device 20 is a quantitative phase image. The quantitative phase image is an image of an optical thickness distribution of a cell. The optical thickness is a product of a physical length in a traveling direction of light and an index of refraction. As the imaging device 20 that acquires the quantitative phase image, for example, an imaging flow cytometer (quantitative phase microscope) as disclosed in Japanese Unexamined Patent Publication No. 2017-166848 may be used. The image acquired by the imaging device 20 is not limited to the above, and may be any image from which features of blood cells such as the white blood cells, and the discrimination target object can be extracted. Further, as the imaging device 20, an imaging device according to a type of image to be acquired, other than the quantitative phase microscope, may be used.

Specifically, the imaging device 20 images a sample obtained from blood to acquire the above image. The image acquired by the imaging device 20 includes two types of an image used as a reference for discrimination and an image that is a discrimination target, that is, an image in which a discrimination target object appears. The image used as a reference for discrimination is an image of a white blood cell, and is an image obtained by imaging a sample that does not include CTCs, that is, includes only white blood cells. Usually, images of a plurality of white blood cells are used as the image used as a reference for discrimination. Therefore, the imaging device 20 acquires the images of the plurality of white blood cells. For the image used as a criterion for discrimination, an image obtained by imaging a sample obtained from blood of a subject can be used. Alternatively, when it can be assumed that a morphology of the white blood cell does not differ substantially between individuals, an image obtained by imaging a sample obtained from blood of a person other than the subject may be used. The discrimination target is an image obtained by imaging a sample obtained from the blood of the subject.

The discrimination device 10 and the imaging device 20 are connected to each other so that an image can be transmitted from the imaging device 20 to the discrimination device 10. The imaging device 20 transmits the acquired image to the discrimination device 10.

Next, the function of the discrimination device 10 according to the present embodiment will be described. As illustrated in FIG. 1, the discrimination device 10 includes a blood cell feature extraction unit 11, a discrimination target object feature extraction unit 12, and a discrimination unit 13.

The blood cell feature extraction unit 11 is a blood cell feature extraction means for acquiring an image of a blood cell and extracting a feature of the blood cell from the acquired image. The blood cell feature extraction unit 11 may acquire an image of an optical thickness distribution of the blood cell. Specifically, the blood cell feature extraction unit 11 extracts the feature of the blood cell as follows.

The blood cell feature extraction unit 11 acquires the image transmitted from the imaging device 20 and used as a criterion for discrimination, that is, the image of a white blood cell. The acquisition of the image does not necessarily have to be performed by receiving the image transmitted from the imaging device 20, and may be performed by an input operation of a user of the discrimination device 10 or the like.

The blood cell feature extraction unit 11 extracts a feature of a white blood cell from the acquired image. This feature is a feature regarding a morphology of the white blood cell (morphological information). The feature may be a feature in which at least one of a shape that can be confirmed from the outside and an internal structure is reflected. The feature of the white blood cell is, for example, a spatial variation amount in optical thickness. The spatial variation amount of the optical thickness is, for example, both or either of a gradient strength and a gradient direction of a vector representing a gradient of an optical thickness at a position within the image of the optical thickness distribution. Specifically, the spatial variation amount of the optical thickness is a Histograms of Oriented Gradients (HOG) feature quantity that is a histogram of a gradient (a gradient direction or angle) of the optical thickness for each position of the white blood cell in the image, which is obtained by HOG. Further, the features of the white blood cell may include features that can be extracted from the image, other than the HOG feature quantity, in addition to the HOG feature quantity or instead of the HOG feature quantity. For example, a differential filter (Sobel filter) may be used to extract the features from the image.

The features of the white blood cell are extracted as multi-dimensional vectors. For example, in the case of the HOG feature quantity, the HOG feature quantity is extracted as a vector of a numerical value for each gradient (angle). For example, when 64 numerical values are extracted as the HOG feature quantity, the features become a 64-dimensional vector. The extraction of features from images is performed in a method of the related art. For example, when the HOG feature quantity is extracted, the method disclosed in Patent Literature 1 may be used.

When a part of an image in which the white blood cell that is feature extraction targets appear is a part of the acquired image, the blood cell feature extraction unit 11 may cut out a region (range) in which the white blood cell appears from the acquired image, that is, a region that is a feature extraction target, and extract the features of the white blood cell from the cut-out region of the image. Cutting out the above region may be performed by a method of the related art. For example, cutting out the region can be performed by object detection using machine learning. Alternatively, it is possible to set a threshold value for a luminance value of the image and perform cutting out the region according to a rule (based on the rule).

The blood cell feature extraction unit 11 extracts the feature of each white blood cell from a plurality of images of white blood cells. When a plurality of white blood cells appear in one image, a region is cut out from the image for each white blood cell and the feature may be extracted. The blood cell feature extraction unit 11 outputs information indicating the extracted features of the white blood cells (for example, the vector described above) to the discrimination unit 13.

The discrimination target object feature extraction unit 12 is a discrimination target object feature extraction means for acquiring an image of a discrimination target object and extracting a feature of the discrimination target object from the acquired image. The discrimination target object feature extraction unit 12 may acquire an image of an optical thickness distribution of the discrimination target object. The discrimination target object feature extraction unit 12 acquires an image that is a discrimination target transmitted from the imaging device 20, that is, an image in which the discrimination target object appears. The acquisition of the image does not necessarily need to be performed by receiving the image transmitted from the imaging device 20, as in the acquisition of the image by the blood cell feature extraction unit 11, but may be performed by, for example, an input operation of the user of the discrimination device 10.

The discrimination target object feature extraction unit 12 extracts the feature of the discrimination target object by using the same method as the feature extraction by the blood cell feature extraction unit 11. There may be a plurality of discrimination target objects that are feature extraction targets (that is, discrimination targets). In this case, the discrimination is performed on each discrimination target object. The discrimination target object feature extraction unit 12 outputs information indicating the extracted feature of the discrimination target object (for example, the vector described above) to the discrimination unit 13.

The discrimination unit 13 is a discrimination means for discriminating whether or not the discrimination target object is the blood cell through anomaly detection based on the feature of the blood cell extracted by the blood cell feature extraction unit 11 and the feature of the discrimination target object extracted by the discrimination target object feature extraction unit 12. The discrimination unit 13 may discriminate whether or not the discrimination target object is a blood cell through LOF or One class SVM as anomaly detection.

Here, the discrimination in the present embodiment and discrimination shown in Patent Literature 1 will be compared and described. In Patent Literature 1, a discriminator (identifier) is created by machine learning such as SVM using features extracted from an image as teacher data to discriminate between white blood cells and CTCs, and discrimination is performed. Features of the white blood cells and the features of the cultured cancer cells are used as learning data. The features of the cultured cancer cells are used as an alternative to features of CTCs. This is because it is difficult to prepare a large amount of CTCs as learning data as described above.

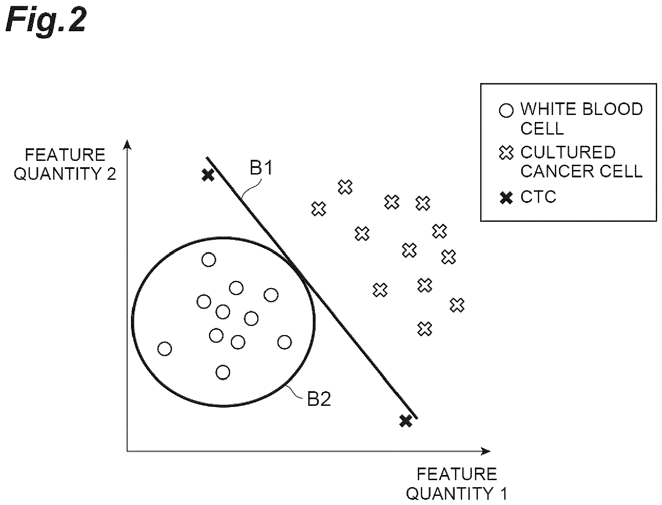

FIG. 2 illustrates the features of the white blood cells and the features of the cultured cancer cells. FIG. 2 indicates the features as two-dimensional data for the sake of simplicity. The discriminator created by the method disclosed in Patent Literature 1 corresponds to a boundary B1 for performing the discrimination illustrated in FIG. 2. The boundary B1 is generated so that a difference between the features of the white blood cells and the features of the cultured cancer cells is maximized.

The method shown in Patent Literature 1 is based on the premise that the features of the CTCs and the features of the cultured cancer cells are very similar. However, it is conceivable that the features of the CTCs and the features of the cultured cancer cells are not necessarily very similar depending on a type of cancer. In this case, positions in a feature space of the features of the CTCs may be distant from positions of the features of the cultured cancer cells and may be positions on the white blood cell side with respect to the boundary B1, as illustrated in FIG. 2. In this case, although the cells are actually CTCs, the cells are wrongly determined as white blood cells.

The discrimination in the present embodiment is performed by anomaly detection based on the features of the white blood cells without using the features corresponding to CTCs (the features of the cultured cancer cells in the above example). That is, the discrimination is performed by anomaly detection without using features of non-blood cells. For example, as illustrated in FIG. 2, a boundary B2 for performing the discrimination is used. The boundary B2 is based on a distribution of positions of the features of the white blood cells. When this is used, positions of features of CTCs in the feature space illustrated in FIG. 2 are not positioned on the white blood cell side with respect to the boundary B2, and erroneous discrimination can be prevented. The discrimination in the present embodiment may be performed by anomaly detection based on the features of the blood cells without using the features of the non-blood cells, and the boundary B2 may not necessarily be generated.

Specifically, the discrimination unit 13 performs the discrimination as follows. The discrimination unit 13 receives information indicating the features of the white blood cells from the blood cell feature extraction unit 11. The discrimination unit 13 receives information indicating the feature of the discrimination target object from the discrimination target object feature extraction unit 12. From the viewpoint of efficiency of processing or the like, the discrimination unit 13 may compress a dimension of the vector, which is the information indicating the feature and perform the discrimination using the compressed vector. The dimensional compression can be performed in a method of the related art and is performed, for example, through principal component analysis (PCA).

The discrimination unit 13 performs the discrimination through anomaly detection in which normality is detected when the discrimination target object is the white blood cell, and anomaly is detected when the discrimination target object is not the white blood cell, based on the features of the white blood cells and the feature of the discrimination target object. When the discrimination is performed by the LOF, the discrimination unit 13 calculates a score of the LOF for the discrimination target object using the following equation.

[Math. 1]

$$\mathrm{lrd}_k(p) = \frac{1}{d_k(p, N_k(p))}$$

$$\mathrm{LOF}_k(p) = \frac{\sum_{q \in N_k(p)} \mathrm{lrd}_k(q)}{k} \frac{1}{\mathrm{lrd}_k(p)}$$

$$\mathrm{LOF}_k(p) = \frac{1}{k} \sum_{q \in N_k(p)} \frac{d_k(p, N_k(p))}{d_k(q, N_k(q))}$$

where p and q are positions of the features in the feature space, and $\mathrm{LOF}_K(p)$ is the score of the LOF for p. $N_K(p)$ is a position of k features closest to p. k is a parameter set in advance and stored in the discrimination device 10. k is set to 10, for example. $d_K(p, N_K(p))$ is a mean reach distance, which is a mean of reach distances $d_K(p, q)$ between p and $q \in N_K(p)$. The reach distance $d_K(p, q)$ between p and $q \in N_K(p)$ is a larger of a distance between p and q and a distance to a position of the feature k-th closest to q. The discrimination unit 13 calculates the score of the LOF by using positions in the feature space of the features of the white blood cells and the feature of the discrimination target object, with the position of the feature of the discrimination target object as p.

The score of the LOF for the determination target object indicates how anomalous the determination target object is, that is, a degree of anomaly. A larger score of the LOF for the determination target object indicates that the determination target object is anomalous, that is, the discrimination target object is not a white blood cell. In the LOF, because a ratio of the mean reach distances is used as an index, calculation is performed while considering not only a distance of a distribution in the feature space of the features of the white blood cells, but also a variation in the distribution, thereby performing scoring regarding how anomalous the features of the determination target object is in the feature space.

The discrimination unit 13 compares the calculated score of the LOF with a preset threshold value. When the calculated score of the LOF exceeds the threshold value, the discrimination unit 13 discriminates that the discrimination target object is not the white blood cell. In this case, the discrimination target object is estimated to be a CTC as described above. On the other hand, when the calculated score of the LOF is smaller than the threshold value, the discrimination unit 13 discriminates that the discrimination target object is the white blood cell.

The discrimination unit 13 outputs a discrimination result. For example, the discrimination unit 13 causes a display device included in the discrimination device 10 to display information indicating the discrimination result. The display is referred to, for example, by the user of the discrimination device 10. The output by the discrimination unit 13 may be performed in the aspect other than the above. For example, the discrimination device 10 may transmit and output the information indicating the discrimination result to another device.

Although, in the above example, a case in which the discrimination is performed by the LOF has been shown, the discrimination may be performed by One class SVM. The above discrimination using One class SVM can be performed similarly to a method using One class SVM of the related art. Further, the discrimination may be performed by using other methods as long as the methods can discriminates whether or not a discrimination target object is a blood cell through anomaly detection using the features of the white blood cells that serve as references for a determination (without using the features (image) of the CTCs and the cultured cancer cells that serve as the references for a determination). Even when an image that is a feature extraction target by the blood cell feature extraction unit 11 resultantly include an image of non-white blood cells such as CTCs, there is no big problem in the above discrimination in a case in which the number of images of non-white blood cells is much smaller than a total number of images. In the present embodiment, the features of the CTCs and cultured cancer cells known in advance need not to be used.

Further, although the score is calculated using the position in the feature space of the feature of each white blood cell when the discrimination is performed by the above-described LOF, the discrimination may be performed by using other methods. For example, a discriminator (learned model) for performing discrimination through machine learning (without using the features (image) of the CTCs and the cultured cancer cells) may be generated from the features of the white blood cells extracted by the blood cell feature extraction unit 11, and the discrimination may be performed using the generated discriminator. The above is the function of the discrimination device 10 according to the present embodiment.

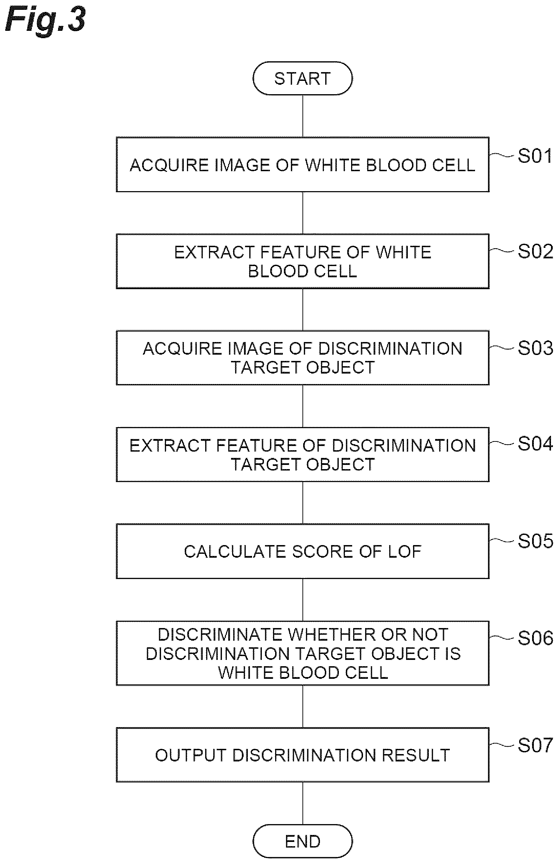

Subsequently, a discrimination method which is processing that is executed by the discrimination device 10 according to the present embodiment (an operation method of the discrimination device 10) will be described using the flowchart of FIG. 3. In the present processing, the image of the white blood cell is acquired by the blood cell feature extraction unit 11 (S01; blood cell feature extraction step). Subsequently, the feature of the white blood cell is extracted from the acquired image by the blood cell feature extraction unit 11 (S02; blood cell feature extraction step). Further, the image of the discrimination target object is acquired by the discrimination target object feature extraction unit 12 (S03; discrimination target object feature extraction step). Subsequently, the feature of the discrimination target object is extracted from the acquired image by the discrimination target object feature extraction unit 12 (S04; discrimination target object feature extraction step). Processing (S01 and S02) for extracting the feature of the white blood cell by the blood cell feature extraction unit 11, and processing (S03 and S04) for extracting the feature of the discrimination target objects by the discrimination target object feature extraction unit 12 do not necessarily have to be performed in the above order, and it suffices if the respective features are extracted.

Subsequently, the discrimination unit 13 calculates the score of the LOF for the determination target object based on the feature of the white blood cell and the feature of the discrimination target object (S05; discrimination step). Subsequently, the discrimination unit 13 discriminates whether or not the discrimination target object is the white blood cell based on the score of the LOF (S06; discriminating step). Although in the present processing, an example of a case in which the LOF is used as the anomaly detection has been shown, the processing is performed according to another anomaly detection method when the other anomaly detection method is used. Subsequently, information indicating a discrimination result is output by the discrimination unit 13 (S07). The above is the processing that is executed by the discrimination device 10 according to the present embodiment.

As described above, in the present embodiment, whether the discrimination target object is a blood cell is discriminated by anomaly detection based on the feature of blood cell (for example, white blood cell) and the feature of the discrimination target object. Accordingly, for example, even when the discrimination of whether the discrimination target object is a white blood cell or a CTC is performed, it suffices if the feature of the white blood cell can be extracted and it is possible to perform the discrimination without preparing the features of the CTCs themselves or the features (image) of the cultured cancer cells. That is, it is possible to perform the discrimination without preparing the features of the non-blood cells. Therefore, according to the present embodiment, for example, it is possible to prevent a decrease in accuracy of discrimination when the features of the cultured cancer cells are used. That is, according to the present embodiment, it is possible to accurately perform discrimination of whether or not a cell is a blood cell. Further, according to the present embodiment, because it is not necessary to prepare the features of the CTCs themselves or the features (image) of the cultured cancer cells, it is possible to easily perform the discrimination.

Further, as in the above-described embodiment, the discrimination may be performed using the LOF or One class SVM as the anomaly detection. According to this configuration, it is possible to perform the discrimination appropriately and reliably. However, it is not necessary to necessarily use LOF or One class SVM as described above, and the discrimination may be performed using another anomaly detection method.

Further, the image used for feature extraction may be an image of the optical thickness distribution, as in the above-described embodiments. According to this configuration, it is possible to reliably extract features for accurately performing the discrimination, and to appropriately and reliably perform the discrimination. However, the image used for extraction of features does not necessarily have to be an image of the optical thickness distribution, and may be any image from which the feature used for discrimination can be extracted.

Further, as in the above-described embodiment, the blood cell when the discrimination of whether the discrimination target object is a blood cell is performed may include a white blood cell. According to this configuration, for example, it is possible to accurately perform estimation of whether the discrimination target object is a CTC. However, the blood cell can be any blood cell other than a white blood cell, as described above. For example, the blood cell may be a hematopoietic stem cell (G0 phase), a hematopoietic stem cell, a lymphoblast, a lymphocyte, a progenitor cell, a monoblast, a monocyte, a myeloblast, a promyelocyte, a myelocyte, a postmyelocyte, a rod-shaped nucleocyte, a lobed nucleocyte, a neutrophil, an eosinophil, a basophil, a proerythroblast, a basophilic erythroblast, a polychromatic erythroblast, a normochromatic erythroblast, a red blood cell, a promegakaryocyte, a megakaryocyte, or the like.

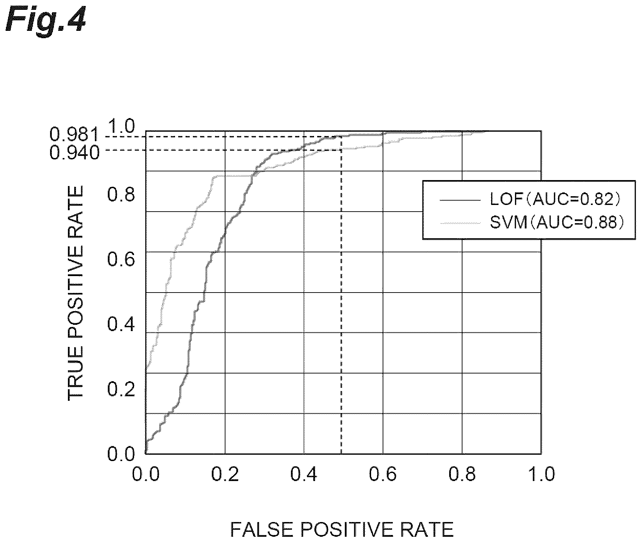

In order to confirm the effectiveness of the present embodiment, evaluation was performed using a data set of 1000 images of white blood cells and cultured cancer cells. FIG. 4 illustrates an ROC curve according to the present embodiment (Example, LOF in FIG. 4). For comparison, an ROC curve of the method using SVM (the comparative example; SVM in FIG. 4) described in Patent Literature 1 is also shown. Shapes of the ROC curves are different, but the embodiment has a higher true positive rate when a false positive rate is 50%. In the above evaluation, because evaluation using CTCs is actually difficult, cultured cancer cells have been used as an alternative.

Subsequently, a modification example of the present embodiment will be shown. In the above-described embodiment, the features of the plurality of white blood cells extracted by the blood cell feature extraction unit 11 are used for the discrimination by the discrimination unit 13. In the present modification example, only some of the features of the plurality of white blood cells are used for the discrimination.

The present modification example has the following configuration. Points not described below are the same as in the above-described embodiment as long as there is no inconsistency. As described above, because only the features of some white blood cells are used for the discrimination, the blood cell feature extraction unit 11 extracts features of a plurality of blood cells.

The discrimination unit 13 performs clustering of the plurality of blood cells based on the features of the plurality of blood cells, and selects blood cells that are used for a discrimination of whether or not the discrimination target object is a blood cell based on a result of the clustering. Specifically, the discrimination unit 13 selects (features of) the white blood cells that are used for discrimination as follows.

The discrimination unit 13 performs clustering based on the position in the feature space of the feature of each white blood cell. Clustering can be performed using a method of the related art, such as K-means. The number of clusters to be generated may be set in advance or determined (automatically) in clustering processing. The discrimination unit 13 selects the white blood cells belonging to any of the clusters obtained by clustering as white blood cells used for discrimination (the selection will be specifically described below). The discrimination unit 13 performs the discrimination as in the above-described embodiment using the features of the selected white blood cells.

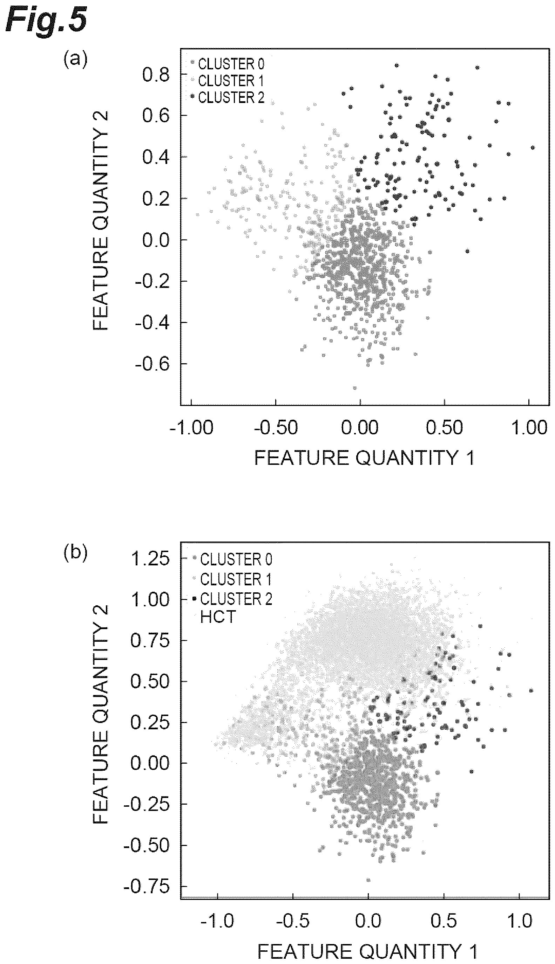

FIG. 5(a) illustrates a graph in an example in which white blood cells are clustered and visualized by the PCA. One plotted point in the graph of FIG. 5(a) indicates a position of a feature of a white blood cell obtained from an image of one white blood cell. In the example illustrated in FIG. 5(a), white blood cells are clustered into three clusters including cluster 0, cluster 1, and cluster 2. FIG. 5(b) illustrates a graph in which points of the features of the cultured cancer cells (HCT) are superimposed, in addition to points of the features of the white blood cells.

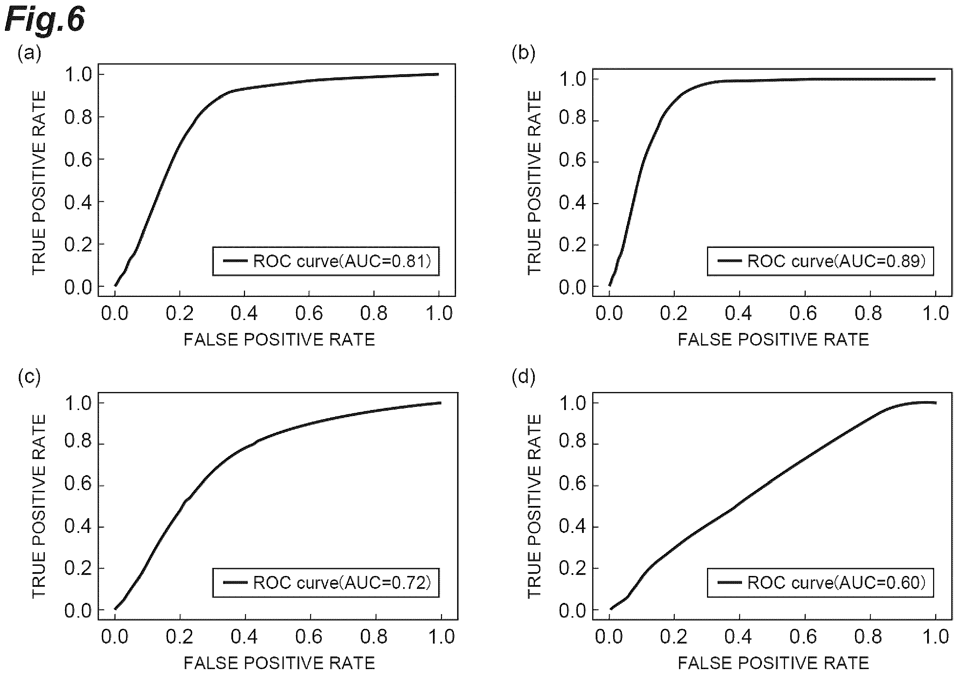

FIG. 6(a) illustrates an ROC curve when discrimination is performed using all the white blood cells in the example illustrated in FIG. 5 (that is, when the discrimination is performed according to the above-described embodiment). FIGS. 6(b), 6(c), and 6(d) show ROC curves when the discrimination is performed using white blood cells belonging to cluster 0, cluster 1, and cluster 2 illustrated in FIG. 5, respectively. Referring to the ROC curve illustrated in FIG. 6, cluster 0 has the best performance. A range in which the positions of the features of the white blood cells in clusters 1 and 2 are distributed and a range in which the positions of the features of the cultured cancer cells are distributed overlap with each other as compared to cluster 0. Further, in clusters 1 and 2, the positions of the features of the white blood cells are more scattered than in cluster 0. From these, in cluster 0, positions of features of white blood cells are gathered to some extent, and it is conceivable that cluster 0 is a typical white blood cell group. It is conceivable that clusters 1 and 2 are not typical white blood cells or are groups in which non-white blood cells cannot be distinguished, because the positions of the features of the white blood cells are not gathered.

Further, when the images of the white blood cells in each cluster were checked, the image of white blood cell in cluster 0 was an image of a typical white blood cell. In cluster 1, there were many images in which a plurality of cells are imaged. In cluster 2, there were many images of cells with complex internal structures (images of cells suspected to be cancer cells) as compared to other cells.

The discrimination unit 13 may perform, for each cluster, discrimination, for example, using test data such as positions of features of cultured cancer cells prepared in advance, and set the cluster with the best performance (for example, an area under the curve (AUC) of the ROC curve) as a cluster that is used for discrimination. Alternatively, the discrimination unit 13 may calculate variations in the positions of features for each cluster and select the cluster based on the variations. The variation is, for example, at least one of a variance and an average distance for each cluster. For example, the cluster with the smallest variation is selected. Alternatively, the cluster with the largest number of elements is selected.

It is possible to make the features of the blood cells that are used for discrimination more appropriate by selecting blood cells such as white blood cells that are used for discrimination based on the clusters as described above. For example, it is possible to use, for discrimination, only features extracted from an image of typical white blood cells, and exclude images of cells whose features overlap with those of the cultured cancer cells. That is, it is possible to construct a high quality white blood cell data set. As a result, it is possible to accurately perform the discrimination, that is, improve discrimination performance.

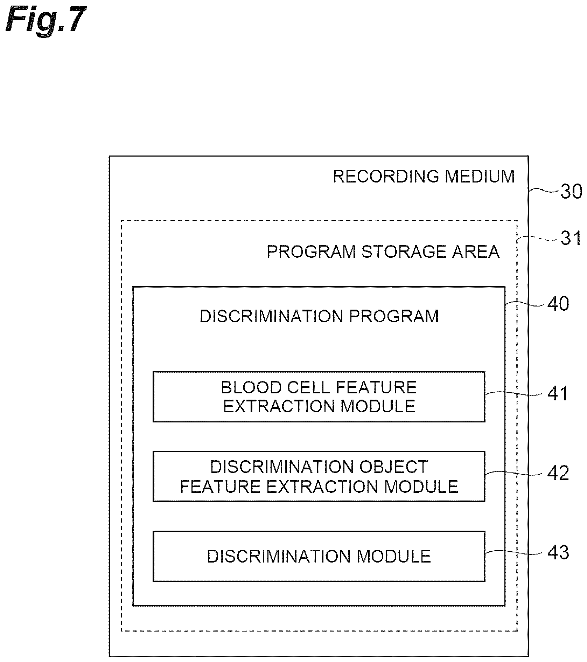

Next, a discrimination program for causing the discrimination device 10 to execute a series of processing described above will be described. As illustrated in FIG. 7, the discrimination program 40 is stored in a program storage area 31 formed in a computer-readable recording medium 30 that is inserted into and accessed by a computer or included in the computer. The recording medium 30 may be a non-transitory recording medium.

The discrimination program 40 includes a blood cell feature extraction module 41, a discrimination target object feature extraction module 42, and a discrimination module 43. Functions realized by executing the blood cell feature extraction module 41, the discrimination target object feature extraction module 42, and the discrimination module 43 are the same as the functions of the blood cell feature extraction unit 11, the discrimination target object feature extraction unit 12, and the discrimination unit 13 of the discrimination device 10 described above.

The discrimination program 40 may be configured so that a part or all of the discrimination program 40 is transferred via a transfer medium such as a communication line, received by another device and recorded (including installation). Further, each module of the discrimination program 40 may be installed in any one of a plurality of computers instead of one computer. In this case, the above-described series of processing are performed by a computer system including the plurality of computers.

**Reference Signs List**

    10 Discrimination device
    11 Blood cell feature extraction unit
    12 Discrimination target object feature extraction unit
    13 Discrimination unit
    20 Imaging device
    30 Recording medium
    31 Program storage area
    40 Discrimination program
    41 Blood cell feature extraction module
    42 Discrimination target object feature extraction module
    43 Discrimination module

**Claims**

1. A discrimination device for discriminating whether or not a discrimination target object is a blood cell based on an image of the discrimination target object, the discrimination device comprising:

a blood cell feature extraction means configured to acquire an image of a blood cell and extract a feature of the blood cell from the acquired image;

a discrimination target object feature extraction means configured to acquire the image of the discrimination target object and extract a feature of the discrimination target object from the acquired image; and

a discrimination means configured to discriminate whether or not the discrimination target object is a blood cell through anomaly detection based on the feature of the blood cell extracted by the blood cell feature extraction means and the feature of the discrimination target object extracted by the discrimination target object feature extraction means.

2. The discrimination device according to claim 1, wherein the discrimination means discriminates whether or not the discrimination target object is the blood cell through LOF or One class SVM as the anomaly detection.

3. The discrimination device according to claim 1 or 2,

wherein the blood cell feature extraction means acquires an image of an optical thickness distribution of the blood cell, and

the discrimination target object feature extraction means acquires an image of an optical thickness distribution of the discrimination target object.

4. The discrimination device according to any one of claims 1 to 3, wherein the blood cell includes a white blood cell.

5. The discrimination device according to any one of claims 1 to 4,

wherein the blood cell feature extraction means extracts features of a plurality of blood cells, and

the discrimination means performs clustering of the plurality of blood cells based on the features of the plurality of blood cells, and selects a blood cell to be used for discrimination of whether or not the discrimination target object is the blood cell based on a result of the clustering.

6. A discrimination method as an operation method of a discrimination device for discriminating whether or not a discrimination target object is a blood cell based on an image of the discrimination target object, the discrimination method comprising:

a blood cell feature extraction step of acquiring an image of a blood cell and extracting a feature of the blood cell from the acquired image;

a discrimination target object feature extraction step of acquiring the image of the discrimination target object and extracting a feature of the discrimination target object from the acquired image; and

a discrimination step of discriminating whether or not the discrimination target object is a blood cell through anomaly detection based on the feature of the blood cell extracted in the blood cell feature extraction step and the feature of the discrimination target object extracted in the discrimination target object feature extraction step.

7. A discrimination program for causing a computer to operate a discrimination device for discriminating whether or not a discrimination target object is a blood cell based on an image of the discrimination target object, the discrimination program causing the computer to function as:

a blood cell feature extraction means configured to acquire an image of a blood cell and extract a feature of the blood cell from the acquired image;

a discrimination target object feature extraction means configured to acquire the image of the discrimination target object and extract a feature of the discrimination target object from the acquired image; and

a discrimination means configured to discriminate whether or not the discrimination target object is a blood cell through anomaly detection based on the feature of the blood cell extracted by the blood cell feature extraction means and the feature of the discrimination target object extracted by the discrimination target object feature extraction means.

8. A computer-readable recording medium having the discrimination program according to claim 7 recorded thereon.

*Fig.1*

# Fig.2

# *Fig.3*

```
                    ┌─────────┐
                    │  START  │
                    └─────────┘
                         │
┌──────────────────────────────────────┐
│   ACQUIRE IMAGE OF WHITE BLOOD CELL   │──── S01
└──────────────────────────────────────┘
                         │
┌──────────────────────────────────────┐
│        EXTRACT FEATURE OF WHITE       │──── S02
│              BLOOD CELL               │
└──────────────────────────────────────┘
                         │
┌──────────────────────────────────────┐
│    ACQUIRE IMAGE OF DISCRIMINATION    │──── S03
│             TARGET OBJECT             │
└──────────────────────────────────────┘
                         │
┌──────────────────────────────────────┐
│ EXTRACT FEATURE OF DISCRIMINATION     │──── S04
│             TARGET OBJECT             │
└──────────────────────────────────────┘
                         │
┌──────────────────────────────────────┐
│        CALCULATE SCORE OF LOF         │──── S05
└──────────────────────────────────────┘
                         │
┌──────────────────────────────────────┐
│      DISCRIMINATE WHETHER OR NOT      │──── S06
│   DISCRIMINATION TARGET OBJECT IS     │
│           WHITE BLOOD CELL            │
└──────────────────────────────────────┘
                         │
┌──────────────────────────────────────┐
│      OUTPUT DISCRIMINATION RESULT     │──── S07
└──────────────────────────────────────┘
                         │
                    ┌─────────┐
                    │   END   │
                    └─────────┘
```

# Fig.4

## *Fig.5*

(a)

(b)

Fig.6

# Fig.7

RECORDING MEDIUM — 30

PROGRAM STORAGE AREA — 31

DISCRIMINATION PROGRAM — 40

BLOOD CELL FEATURE
EXTRACTION MODULE — 41

DISCRIMINATION OBJECT
FEATURE EXTRACTION MODULE — 42

DISCRIMINATION MODULE — 43

**INTERNATIONAL SEARCH REPORT**

International application No.

PCT/JP2021/022375

**A. CLASSIFICATION OF SUBJECT MATTER**
G06T 7/00(2017.01)i; G01N 33/48(2006.01)i; G01N 33/483(2006.01)i; G01N 21/17(2006.01)i; G01N 21/41(2006.01)i
FI:     G01N33/48 M; G06T7/00 350B; G01N21/17 A; G01N21/41 Z; G06T7/00 630; G01N33/483 C

According to International Patent Classification (IPC) or to both national classification and IPC

**B. FIELDS SEARCHED**

Minimum documentation searched (classification system followed by classification symbols)
G06T7/00; G01N33/48; G01N33/483; G01N21/17; G01N21/41

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-508729 A (THE SCRIPPS RESEARCH INSTITUTE) 07 March 2013 (2013-03-07) claims, paragraphs [0010]-[0022], [0044], [0062]-[0092] | 1-2, 4-8<br>3 |
| Y | WO 2016/017533 A1 (HAMAMATSU UNIVERSITY SCHOOL OF MEDICINE) 04 February 2016 (2016-02-04) claims 5, 8, paragraphs [0002]-[0003], [0008] | 3 |
| A | WO 2011/099565 A1 (SYSMEX CORPORATION) 18 August 2011 (2011-08-18) claims, fig. 1-11 | 1-8 |
| A | JP 2008-533440 A (AMNIS CORPORATION) 21 August 2008 (2008-08-21) claims | 1-8 |
| A | CN 104766324 A (SHANDONG UNIVERSITY) 08 July 2015 (2015-07-08) claims | 1-8 |

☐ Further documents are listed in the continuation of Box C.     ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
26 July 2021 (26.07.2021)

Date of mailing of the international search report
03 August 2021 (03.08.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

INTERNATIONAL SEARCH REPORT

Information on patent family members

| International application No. |
| --- |
| PCT/JP2021/022375 |

| Patent Documents referred in the Report | Publication Date | Patent Family | Publication Date |
| --- | --- | --- | --- |
| JP 2013-508729 A | 07 Mar. 2013 | US 2012/0276555 A1 claims, paragraphs [0012]-[0024], [0050], [0068]-[0105] WO 2011/050103 A1 CN 102782498 A | |
| WO 2016/017533 A1 | 04 Feb. 2016 | US 2017/0212033 A1 claims 5, 8, paragraphs [0002]-[0003], [0008] EP 3176563 A1 | |
| WO 2011/099565 A1 | 18 Aug. 2011 | (Family: none) | |
| JP 2008-533440 A | 21 Aug. 2008 | US 2006/0204071 A1 claims WO 2006/083969 A2 | |
| CN 104766324 A | 08 Jul. 2015 | (Family: none) | |

**REFERENCES CITED IN THE DESCRIPTION**

**Patent documents cited in the description**

- WO 2016017533 A
- JP 2017166848 A